# EUROPÄISCHE PATENTSCHRIFT

(11) **EP 3 469 689 B1**
(45) Veröffentlichungstag und Bekanntmachung des Hinweises auf die Patenterteilung: **24.01.2024**
(21) Anmeldenummer: 17745248.9
(22) Anmeldetag: 09.06.2017
(51) Int. Cl.: H02K 9/19, H02K 5/20

(54) **KÜHLGEHÄUSE FÜR EINEN ELEKTROMOTOR**
COOLING HOUSING FOR AN ELECTRIC MOTOR
BOÎTIER DE REFROIDISSEMENT POUR UN MOTEUR ÉLECTRIQUE

(30) Priorität: 09.06.2016 DE 102016110658
(43) Veröffentlichungstag der Anmeldung: 17.04.2019
(73) Patentinhaber: Puls, Rainer M., 76227 Karlsruhe (DE); Puls, Oliver, 76227 Karlsruhe (DE)
(72) Erfinder: Puls, Rainer M., 76227 Karlsruhe (DE); Puls, Oliver, 76227 Karlsruhe (DE)
(74) Vertreter: Ullrich & Naumann PartG mbB
(86) Internationale Anmeldenummer: PCT/DE2017/200050
(87) Internationale Veröffentlichungsnummer: WO 2017/211360

(56) Entgegenhaltungen:
- EP-A1- 2 645 544
- EP-A1- 2 975 742
- WO-A1-2012/080566
- WO-A2-2012/154423
- DE-A1-102013 112 010
- DE-U- 1 802 282
- US-A1- 2012 025 638

## Beschreibung

Die Erfindung betrifft ein Kühlgehäuse mit einem Innenraum zur Aufnahme eines Elektromotors, wobei der Elektromotor aus einem zentral drehgelagerten Rotor und einem den Rotor umgebenden Stator besteht und wobei der Stator eine Vielzahl elektrischer Wicklungen umfasst.

Derartige, von einem flüssigen Kühlmedium wie z.B. Wasser durchströmte Kühlgehäuse sind aus der Praxis hinlänglich bekannt. Dabei werden der Stator mit seinen Wicklungen sowie der Motorinnenraum von außen her gekühlt, vorzugsweise über direkten Kontakt mit dem Stator und dessen Wickelköpfen. Das flüssige Kühlmedium nimmt die Wärme des Motors auf und wird an in einem externen Wärmetauscher rückgekühlt.

Bekannt sind von einem flüssigen Kühlmittel durchströmbare Kühlgehäuse für stark beanspruchte Elektromotoren, z.B. Antriebsmotoren von Elektrofahrzeugen, deren Kühlmittelkanäle als Kühlspiralen ausgebildet sind, wodurch sich eine wendelförmige Strömung des Kühlmittels ergibt, welches z.B. Wasser, Öl oder Glykol sein kann. Solche Kühlgehäuse sind von DE1802282 und WO2012154423 bekannt.

Allerdings ist die Wärmekapazität des die Kühlmittelkanäle durchströmenden Kühlfluids größer, als die durch Wärmeübertragung von dem Stator des Elektromotors und von dessen Wickelköpfen abführbare Wärmemenge. Die Kapazität des vorhandenen Kühlfluids wird daher nur teilweise ausgeschöpft.

Der Erfindung liegt die Aufgabe zugrunde, ein Kühlgehäuse anzugeben, bei dem die Wärmekapazität des Kühlmittels besser genutzt wird. Außerdem soll das Kühlgehäuse einfach in der Konstruktion sein. Schließlich soll ein Unterschied zu wettbewerblichen Kühlgehäusen geschaffen werden.

Zur Lösung der voranstehenden Aufgabe wird ein Kühlgehäuse wie in Anspruch 1 definiert vorgeschlagen.

Mit einem solchen Kühlgehäuse wird die Wärmekapazität des in den Kühlmittelkanälen des ersten Kühlkreislaufs strömenden Kühlmediums, welches z.B. Wasser oder Glykol sein kann, gleich zweifach genutzt. Zum einen erfolgt auf kürzestem Wege die Kühlung der innerhalb angeordneten Motorbauteile und insbesondere des Stators und dessen Wicklungsköpfe. Zum anderen wird die vorhandene Wärmekapazität des Kühlmediums dazu genutzt, ein zweites Kühlmedium, welches in einem von dem ersten Kühlkreislauf getrennten, zweiten Kühlkreislauf umgewälzt wird, zu kühlen. Dieses zweite Kühlmedium bzw. Kühlmittel ist ein Ol, welches als Teil des zweiten Kühlkreislaufs das Innere des Elektromotors durchströmt, und diesen so gleichsam von innen kühlt.

Der Grundgedanke der Erfindung ist es also, das Kühlpotential des vorhandenen Kühlmittels des ersten Kühlkreislaufs optimal auszunutzen, indem der Elektromotor nicht nur über seinen umgebenden Kühlmantel gekühlt wird, sondern zugleich dem Kühlmittel eines zweiten, getrennten Kühlmittelkreislaufs Wärme entzogen wird, wobei vorzugsweise dieser zweite Kühlkreislauf durch das Innere des Elektromotors führt.

Vorgeschlagen wird unter anderem, dass die Strömungsquerschnitte der einzelnen Kühlmittelkanäle des ersten Kühlkreislaufs größer sind, als die Strömungsquerschnitte der einzelnen Kühlmittelkanäle des zweiten Kühlkreislaufs.

Dadurch wird dem Umstand Rechnung getragen, dass vor allem das Kühlmedium des ersten Kühlkreislaufs, vorzugsweise Wasser oder Glycol, die höhere Wärmekapazität und damit das höhere Kühlpotential aufweist.

Die Kühlmittelkanäle des ersten Kühlkreislaufs können sich zumindest abschnittsweise in Wendelform zwischen dem ersten Kühlmittelzulauf und dem ersten Kühlmittelablauf erstrecken.

Ebenso können sich die Kühlmittelkanäle des zweiten Kühlkreislaufs zumindest abschnittsweise in Wendelform zwischen dem zweiten Kühlmittelzulauf und dem zweiten Kühlmittelablauf erstrecken.

Die Kühlmittelkanäle des zweiten Kühlkreislaufs können in Form einer mehrgängigen Wendel angeordnet und durchströmt sein. In diesem Fall ist deren Wendelanzahl größer, als die Wendelanzahl der in Form einer ein- oder mehrgängigen Wendel angeordneten Kühlmittelkanäle des ersten Kühlkreislaufs. Vorzugsweise sind an den Kühlmittelzulauf und den Kühlmittelablauf des ersten Kühlkreislaufs jeweils Kühlmittelleitungen angeschlossen, welche die Verbindung mit einem außerhalb des Kühlgehäuses angeordneten Kühler herstellen, in dem die Rückkühlung des ersten Kühlmittels erfolgt.

Erfindungsmässig ist zudem eine Ausgestaltung, bei der an den Kühlmittelzulauf und den Kühlmittelablauf des zweiten Kühlkreislaufs jeweils Kühlmittelleitungen angeschlossen sind, wobei die eine Kühlmittelleitung von dem einen Ende, und die andere Kühlmittelleitung von dem anderen Ende her in den Innenraum des Kühlgehäuses führt, wo sich der Motor befindet. Eine solche Ausgestaltung des Kühlgehäuses erfordert mindestens eine in mindestens einer der beiden Kühlmittelleitungen angeordnete Kühlmittelpumpe.

Das Kühlmedium des ersten Kühlkreislaufs kann unterschiedlich zu dem Kühlmedium des zweiten Kühlkreislaufs sein. Erfindungsmässig ist das Kühlmedium in dem zweiten Kühlkreislauf ein Öl.

Das Kühlmedium in dem ersten Kühlkreislauf kann z. B. Wasser oder ein Glykol sein.

Die Kühlwände und der Außenmantel können entweder eigene Bauteile sein, die flüssigkeitsdicht miteinander verbunden sind, oder sie sind gemeinsam als ein einstückiger, materialeinheitlicher Körper ausgebildet. Dabei kann die Fertigung des Kühlgehäuses in einem Stück erfolgen, z.B. durch Herstellung des Kühlgehäuses im 3-D-Druck.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele eines erfindungsgemäßen Kühlgehäuses anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: einen Elektromotor einschließlich eines den Elektromotor umgebenden Kühlgehäuses in einem Längsschnitt entlang der Motordrehachse;

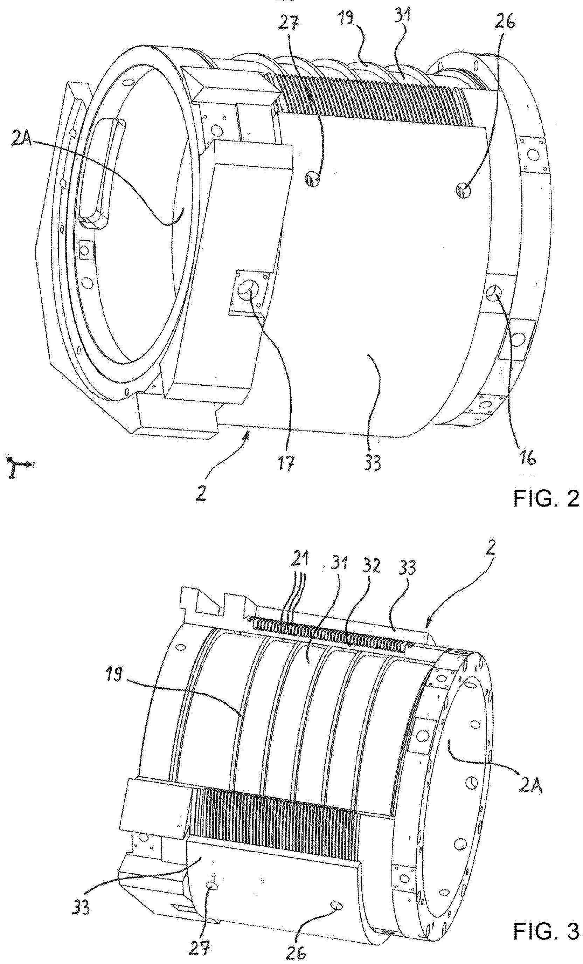

- Fig. 2: in perspektivischer Darstellung das Kühlgehäuse des Elektromotors, wobei einzelne Wandschichten des Kühlgehäuses teilweise geschnitten und teilweise entfernt wiedergegeben sind, um den inneren Aufbau und vor allem die Kühlmittelkanäle besser erkennen zu können;
- Fig. 3: das teils aufgeschnittene Kühlgehäuse nach Fig. 2 in einer anderen perspektivischen Darstellung;
- Fig. 4: in einem Halbschnitt eine zweite Ausführungsform des Elektromotors mit einem anders gestalteten Kühlgehäuse, welches hier einstückig bzw. materialeinheitlich ausgebildet ist;
- Fig. 5: in einem Längsschnitt einen nicht-erfindungsgemäßen Elektromotor mit einem wiederum einstückig bzw. materialeinheitlich ausgebildeten Kühlgehäuse, wobei die Kühlmittelkanäle der beiden Kühlkreisläufe im Wesentlichen in derselben radialen Ebene angeordnet sind, und
- Fig. 6: in einem Längsschnitt eine vierte Ausführungsform des Elektromotors mit einer abschnittsweisen Aufteilung von Kühlkreisläufen.

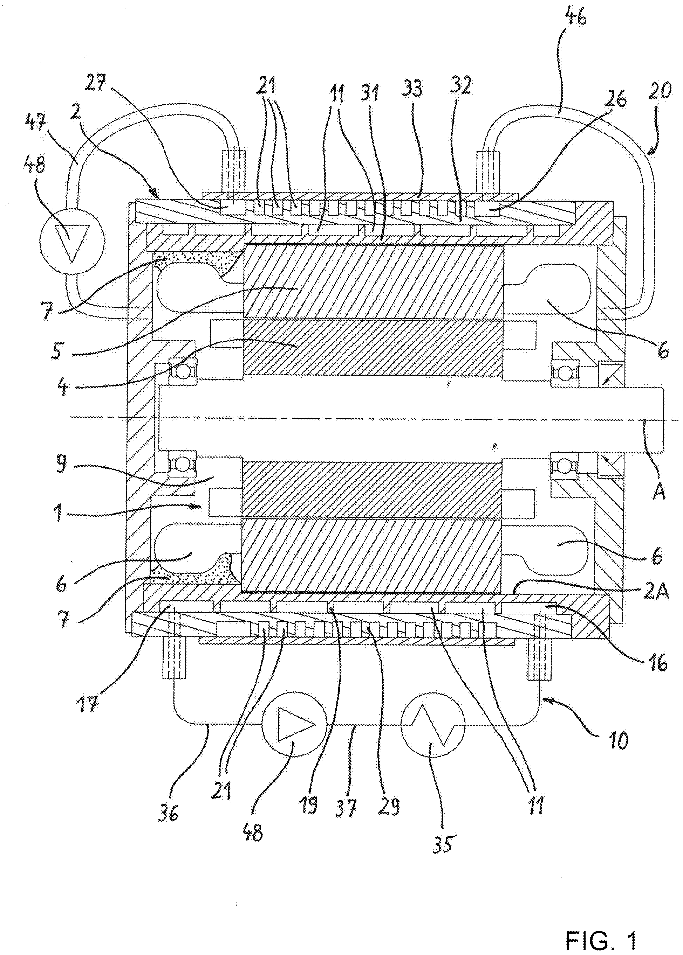

Die Fig. 1 zeigt in einem Längsschnitt entlang der Motordrehachse A einen Elektromotor 1, welcher Bestandteil eines Fahrzeugantriebs ist. Der Elektromotor 1 ist außen von einem als Kühlmantel ausgebildeten, zylindrisch gestalteten Kühlgehäuse 2 umgeben. Das Kühlgehäuse 2 dient dazu, die im Betrieb des oft mit hoher Dauerlast betriebenen Elektromotors entstehende Wärme möglichst effektiv abzuführen.

Der Elektromotor 1 setzt sich in an sich bekannter Bauart aus einem zentral angeordneten Rotor 4, welcher die Antriebswelle des Elektromotors antreibt, und einem umgebenden Stator 5 zusammen. Bestandteile des Stators 5 sind unter anderem die Statorwicklungen und die Wicklungsköpfe 6. Der Rotor 4 und der Stator 5 sind in dem Innenraum des Elektromotors 1 untergebracht. Dieser ist zur Kühlung von einem flüssigen Kühlmedium durchströmt, was im Folgenden noch näher erläutert werden wird.

Wichtig für die Motorkühlung ist ferner das umgebende Kühlgehäuses 2, welches zu diesem Zweck so mit dem Stator 5 und insbesondere den sich stark aufheizenden Statorwicklungen 6 verbunden ist, dass sich in den Kontaktbereichen eine möglichst gute Wärmeleitung einstellt. Um die Wärmeleitung zwischen den Statorwicklungen bzw. den Wicklungsköpfen 6 einerseits und der Innenwandung 2A des umgebenden Kühlgehäuses 2 andererseits zu verbessern, können die hier bauartbedingt existierenden Zwischenräume und Spalte mit einer Vergussmasse 7 aus wärmeleitendem Kunststoff gefüllt sein. Alternativ können die Wicklungsköpfe 6 von Aluminiumkappen umschlossen sein, die ebenfalls eine verbesserte direkte Wärmeleitung zu der Innenwandung 2A des umgebenden Kühlmantels herstellen. Die Vergussmasse 7 bzw. die Aluminiumkappen weisen dann einen direkten Kontakt zum Kühlmantelgehäuse auf, und stellen so eine zusätzliche Fläche zur Wärmeübertragung bereit.

Das Kühlgehäuse 2 als der den Elektromotor umgebende Kühlmantel setzt sich gemäß Fig. 1 aus mehreren Wandungen zusammen, die zwischen sich Kühlmittelkanäle bilden.

Unmittelbar um den Stator 5 und die Wicklungen herum angeordnet ist eine innere Kühlwand 31, welche vorzugsweise in der bereits beschriebenen, besonders gut wärmeleitenden Verbindung mit dem Stator 6 bzw. den Wicklungen 6 steht, und welche zugleich den Gehäusemantel des Elektromotors bildet.

Die innere Kühlwand 31 ist in der Weise gestaltet, dass sie Kühlmittelkanäle 11 eines ersten Kühlkreislaufs 10 nach innen hin begrenzt. Diese Kühlmittelkanäle 11 erstrecken sich zwischen einem ersten Kühlmittelzulauf 16 und einem ersten Kühlmittelablauf 17, und werden 30 von einem ersten Kühlmedium durchströmt.

Der Verlauf der ersten Kühlmittelkanäle 11 ist zwar im Prinzip beliebig. Bevorzugt wird jedoch ein durch radial sich erstreckende Rippen 19 zwischen den einzelnen Windungen bestimmter, wendelförmiger Verlauf der ersten Kühlmittelkanäle 11 zwischen dem Kühlmittelzulauf 16 und dem Kühlmittelablauf 17. Die Wendel kann eine mehrgängige Wendel sein, bevorzugt wird jedoch eine eingängige Wendel. Die Rippen 19 sind an der Außenseite der inneren Kühlwand 31 angeformt.

An den Kühlmittelzulauf 16 und an den Kühlmittelablauf 17 sind jeweils Kühlmittelleitungen 36, 37 angeschlossen. Über diese Kühlmittelleitungen 36, 37 besteht eine Verbindung der Kühlmittelkanäle 11 des ersten Kühlkreislaufs 10 zu einem außerhalb des Kühlgehäuses 2 angeordneten Kühler 35. Dieser kann z.B. gegenüber der umgebenden Luft arbeiten.

Bestandteil des Kühlgehäuses 2 sind außerdem Kühlmittelkanäle 21 eines zweiten Kühlkreislaufs 20. Auch die Kühlmittelkanäle 21 des zweiten Kühlkreislaufs 20 erstrecken sich zwischen einem Kühlmittelzulauf 26 und einem Kühlmittelablauf 27.

Der zweite Kühlkreislauf 20 ist getrennt von dem ersten Kühlkreislauf 10, so dass beide Kühlkreisläufe 20, 10 unterschiedliche Kühlmedien führen können, ohne dass es zu einer Vermischung kommt.

Eine weitere Kühlwand 32, die in Bezug auf die Achse A des Motors weiter außen angeordnet ist als die innere Kühlwand 31, trennt die Kühlmittelkanäle 21 des zweiten Kühlkreislaufs 20 von den Kühlmittelkanälen 11 des ersten Kühlkreislaufs 10. Schließlich schließt ein Außenmantel 33 die Kühlmittelkanäle 21 des zweiten Kühlkreislaufs 20 nach außen hin ab.

An den Kühlmittelzulauf 26 und den Kühlmittelablauf 27 des zweiten Kühlkreislaufs 20 sind jeweils Kühlmittelleitungen 46, 47 angeschlossen. Die eine Kühlmittelleitung 46 mündet an dem einen Ende, und die andere Kühlmittelleitung 47 mündet an dem anderen Ende in den Innenraum 9 des Kühlgehäuses 2. Auf diese Weise führt der zweite Kühlkreislauf 20 durch den Innenraum 9 des Elektromotors, wodurch das so strömende zweite Medium zu einer unmittelbaren Kühlung des Elektromotors führt. Dieses zweite Kühlmedium ist ein Öl.

Zur Umwälzung des zweiten Kühlmediums dient eine in mindestens einer der Kühlmittelleitungen 46, 47 angeordnete Kühlmittelpumpe 48.

Auch die Kühlmittelkanäle 21 des zweiten Kühlkreislaufs 20 können in Wendelform zwischen dem zweiten Kühlmittelzulauf 26 und dem zweiten Kühlmittelablauf 27 verlaufen. Von Vorteil ist, wenn die durch radial sich erstreckende Rippen 29 getrennten Windungen der Kühlmittelkanäle 21 des zweiten Kühlkreislaufs 20 in Form einer mehrgängigen Wendel verlaufen, wobei die Wendelanzahl der mehrgängigen Wendel größer ist, als die Wendelanzahl der ein- oder mehrgängigen Wendel der Kühlmittelkanäle 11 des ersten Kühlkreislaufs 10. Die Rippen 29 sind einstückig an der Außenseite der weiteren, weiter außen angeordneten Kühlwand 32 angeformt.

Die Anordnung und der Verlauf der Kühlmittelkanäle 11, 21 und Rippen 19, 29 kann jedoch auch anders sein, wobei die konkrete Auslegung vor allem von den wärmetechnischen Gegebenheiten des Elektromotors abhängt.

Die Strömungsquerschnitte der einzelnen Kühlmittelkanäle 11 des ersten Kühlkreislaufs 10 sind größer als die Strömungsquerschnitte der einzelnen Kühlmittelkanäle 21 des zweiten Kühlkreislaufs 20.

Das Kühlmedium in dem ersten Kühlkreislauf 10 kann ebenfalls ein Öl sein. Hinsichtlich des Kühlpotentials bevorzugt ist jedoch Wasser oder Glykol als Kühlmedium.

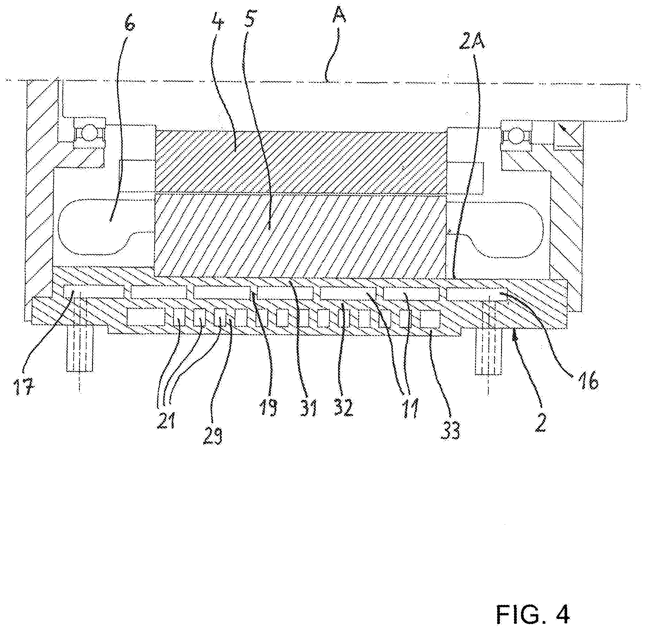

Das in Fig. 4 gezeigte Kühlgehäuse 2 setzt sich nicht aus einzelnen Mänteln zusammen, sondern ist als materialeinheitlicher Körper aus einem Stück gefertigt, z.B. durch Herstellung dieses Kühlgehäuses im 3-D-Druck. An ein- und demselben Körper sind daher die innere Kühlwand 31, die weitere Kühlwand 32, der Außenmantel 33, die radial sich erstreckenden Rippen 19 zwischen der inneren Kühlwand 31 und der äußeren Kühlwand 32, und die radial sich erstreckenden Rippen 29 zwischen der äußeren Kühlwand 32 und dem Außenmantel 33 ausgebildet.

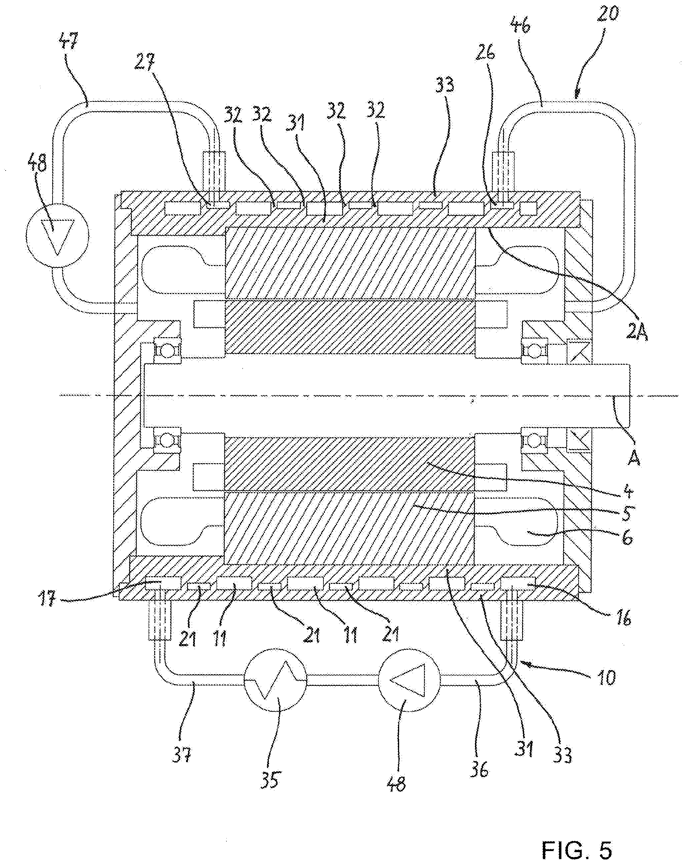

Auch das in Fig. 5 gezeigte Kühlgehäuse 2 ist als materialeinheitlicher Körper aus einem Stück gefertigt, z.B. durch Herstellung des Kühlgehäuses im 3-D-Druck. Bei diesem nicht-erfindungsgemäßen Beispiel befinden sich die Kühlmittelkanäle 21 des zweiten Kühlkreislaufs 20 nicht zwingend radial weiter außen als die Kühlmittelkanäle 11 des ersten Kühlkreislaufs 10. Stattdessen sind alle Kühlmittelkanäle 11, 21 in etwa auf demselben radialen Umfang angeordnet. Die Trennung der Kühlmittelkanäle 11 des ersten von den Kühlmittelkanälen 21 des zweiten Kühlkreislaufs erfolgt hier über eine Vielzahl zweiter Kühlwände 32. Diese Wände 32 erstrecken sich radial, sind aber auch bei diesem nicht-erfindungsgemäßen Beispiel weiter außen angeordnet als die innere Kühlwand 31.

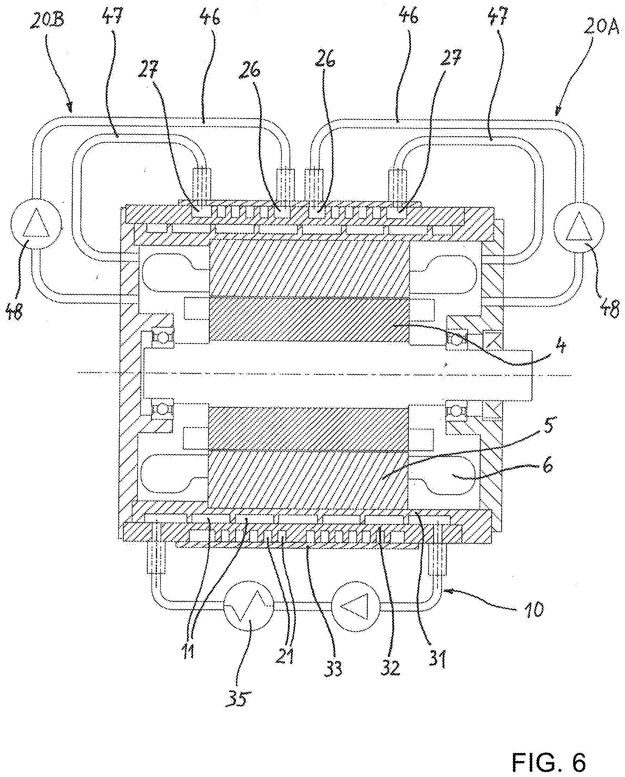

Bei dem in Fig. 6 wiedergegebenen Kühlgehäuse 2 ist der äußere Kühlkreislauf nicht aus einem oder mehreren durchgehend vom einen bis zum anderen Ende des Kühlgehäuses 2 verlaufenden Kühlkanälen gebildet, stattdessen sind zwei oder mehr Kühlkreisläufe 20A, 20B vorhanden, wobei sich jeder Kühlkreislauf 20A, 20B nur über eine Teillänge der Gesamtlänge des Kühlgehäuses 2 erstreckt. Dies schafft die Möglichkeit, die Kühlmittelzuläufe 26 bzw. die Kühlmittelabläufe 27 des zweiten Kühlkreislaufs dort zu platzieren, wo es aus Gründen des Wärmetransports optimal ist.

Bei der Ausführungsform nach Fig. 6 ist zu diesem Zweck der Kühlmittelzulauf 26 zweimal vorhanden, und ebenso der Kühlmittelablauf 27.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Elektromotor
- 2: Kühlgehäuse
- 2A: Innenwandung
- 4: Rotor
- 5: Stator
- 6: Wicklungen
- 7: Vergussmasse
- 9: Innenraum
- 10: Kühlkreislauf
- 11: Kühlmittelkanäle
- 16: Kühlmittelzulauf
- 17: Kühlmittelablauf
- 19: Rippe
- 20: Kühlkreislauf
- 20A: Kühlkreislauf
- 20B: Kühlkreislauf
- 21: Kühlmittelkanäle
- 26: Kühlmittelzulauf
- 27: Kühlmittelablauf
- 29: Rippe
- 31: innere Kühlwand
- 32: weitere, äußere Kühlwand
- 33: Außenmantel
- 35: Kühler
- 36: Kühlmittelleitung
- 37: Kühlmittelleitung
- 46: Kühlmittelleitung
- 47: Kühlmittelleitung
- 48: Kühlmittelpumpe

- A: Motordrehachse

## Patentansprüche

1. Kühlgehäuse (2) mit einem Innenraum (9) zur Aufnahme eines Elektromotors (1), wobei der Elektromotor (1) aus einem zentral drehgelagerten Rotor (4) und einem den Rotor (4) umgebenden Stator (5) besteht und wobei der Stator (5) eine Vielzahl elektrischer Wicklungen (6) umfasst, mit folgenden Bestandteilen:
- eine um den Stator (5) herum angeordnete innere Kühlwand (31), die in wärmeleitender Verbindung mit dem Stator (5) steht und Kühlmittelkanäle (11) eines ersten Kühlkreislaufs (10) nach innen hin begrenzt, die sich zwischen einem ersten Kühlmittelzulauf (16) und einem ersten Kühlmittelablauf (17) erstrecken,
- mindestens eine weitere Kühlwand (32), die die Kühlmittelkanäle (11) des ersten Kühlkreislaufs (10) von Kühlmittelkanälen (21) eines zweiten Kühlkreislaufs (20) trennt, wobei sich die Kühlmittelkanäle (21) des zweiten Kühlkreislaufs (20) zwischen einem zweiten Kühlmittelzulauf (26) und einem zweiten Kühlmittelablauf (27) erstrecken, und der zweite Kühlkreislauf (20) getrennt von dem ersten Kühlkreislauf (10) ist, wobei der zweite Kühlkreislauf als Kühlmittel Öl verwendet, und
- ein Außenmantel (33), der die Kühlmittelkanäle (21) des zweiten Kühlkreislaufs (20) nach außen hin begrenzt,
**dadurch gekennzeichnet, dass** an den zweiten Kühlmittelzulauf (26) und an den zweiten Kühlmittelablauf (27) von außerhalb des Kühlgehäuses jeweils Kühlmittelleitungen (46, 47) angeschlossen sind, wobei die eine Kühlmittelleitung (46) an dem einen Ende, und die andere Kühlmittelleitung (47) an dem anderen Ende des Kühlgehäuses in den Innenraum (9) des Kühlgehäuses führt,
wobei die Kühlmittelkanäle (21) des zweiten Kühlkreislaufs (20) sich radial weiter außen befinden als die Kühlmittelkanäle (11) des ersten Kühlkreislaufs (10),
wobei die weitere Kühlwand (32) in Bezug auf eine Achse (A) des Motors vorzugsweise weiter außen angeordnet ist als die innere Kühlwand (31).

2. Kühlgehäuse nach Anspruch 1, **dadurch gekennzeichnet, dass** die Strömungsquerschnitte der einzelnen Kühlmittelkanäle (11) des ersten Kühlkreislaufs (10) größer als die Strömungsquerschnitte der einzelnen Kühlmittelkanäle (21) des zweiten Kühlkreislaufs (20) sind.

3. Kühlgehäuse nach Anspruch 1 oder 2, **dadurch gekennzeichnet, dass** die Kühlmittelkanäle (11) des ersten Kühlkreislaufs (10) zumindest abschnittsweise in Wendelform zwischen dem ersten Kühlmittelzulauf (16) und dem ersten Kühlmittelablauf (17) verlaufen.

4. Kühlgehäuse nach Anspruch 3, **dadurch gekennzeichnet, dass** benachbarte Windungen des wendelförmigen Verlaufs durch Rippen (19) voneinander getrennt sind, die an der Außenseite der inneren Kühlwand (31) angeformt sind.

5. Kühlgehäuse nach einem der Ansprüche 1 bis 4, **dadurch gekennzeichnet, dass** die Kühlmittelkanäle (21) des zweiten Kühlkreislaufs (20) zumindest abschnittsweise in Wendelform zwischen dem zweiten Kühlmittelzulauf (26) und dem zweiten Kühlmittelablauf (27) verlaufen.

6. Kühlgehäuse nach Anspruch 5, **dadurch gekennzeichnet, dass** benachbarte Windungen des wendelförmigen Verlaufs durch Rippen (29) voneinander getrennt sind, die an der Außenseite der weiteren Kühlwand (32) angeformt sind.

7. Kühlgehäuse nach Anspruch 3 und 5, **dadurch gekennzeichnet, dass** die Kühlmittelkanäle (21) des zweiten Kühlkreislaufs (20) in Form einer mehrgängigen Wendel angeordnet sind, und dass deren Wendelanzahl größer ist, als die Wendelanzahl der in Form einer ein- oder mehrgängigen Wendel angeordneten Kühlmittelkanäle (11) des ersten Kühlkreislaufs (10).

8. Kühlgehäuse nach einem der Ansprüche 1 bis 7, **dadurch gekennzeichnet, dass** an den ersten Kühlmittelzulauf (16) und den ersten Kühlmittelablauf (17) jeweils Kühlmittelleitungen (36, 37) zur Verbindung mit einem außerhalb des Kühlgehäuses angeordnete Kühler (35) angeschlossen sind.

9. Kühlgehäuse nach Anspruch 1, **gekennzeichnet durch** mindestens eine in mindestens einer der Kühlmittelleitungen (46, 47) angeordnete Kühlmittelpumpe (48).

10. Kühlgehäuse nach einem der Ansprüche 1 bis 9, **dadurch gekennzeichnet, dass** das Kühlmedium in dem ersten Kühlkreislauf (10) unterschiedlich zu dem Kühlmedium in dem zweiten Kühlkreislauf (20) ist.

11. Kühlgehäuse nach einem der Ansprüche 1 bis 10, **dadurch gekennzeichnet, dass** die Kühlwände (31, 32) und der Außenmantel (33) jeweils eigene Bauteile sind, die flüssigkeitsdicht miteinander verbunden sind.

12. Kühlgehäuse nach einem der Ansprüche 1 bis 10, **dadurch gekennzeichnet, dass** die Kühlwände (31, 32) und der Außenmantel (33) gemeinsam als ein einstückiger, materialeinheitlicher Körper ausgebildet sind.

## Claims

1. Cooling housing (2) with an internal space (9) for accommodation of an electric motor (1), whereby the electric motor (1) consists of a centrally pivoting rotor (4) and a stator (5) surrounding the rotor (4), and whereby the stator (5) comprises a multitude of electrical windings (2), having the following components:
- an internal cooling wall (31) that is arranged about the stator (5) and is in heatconducting connection to the stator (5) and forms the border, with respect to the inside, of coolant channels (11) of the first cooling circuit (10) that extend between a first coolant inlet (16) and a first coolant outlet (17);
- at least one additional cooling wall (32) that separates the coolant channels (11) of the first cooling circuit (10) from coolant channels (21) of a second cooling circuit (20), whereby the coolant channels (21) of the second cooling circuit (20) extend between a second coolant inlet (26) and a second coolant outlet (27), and the second cooling circuit (20) is separated from the first cooling circuit (10), wherein the second coolant is preferably oil; and
- an external jacket (33) that borders, with respect to the outside, the coolant channels (21) of the second cooling circuit (20),
**characterized in that** the second coolant inlet (26) and the second coolant outlet (27) each have coolant lines (46, 47) connected to them from the outside of cooling housing, whereby the one coolant line (46) on the one end and the other coolant line (47) on the other end of the cooling housing lead into the internal space (9) of the cooling housing,
wherein the coolant channels (21) of the second cooling circuit (20) are located radially further outside than the coolant channels (11) of the first cooling circuit (10),
wherein the additional cooling wall (32) is arranged further outside than the internal cooling wall (31) with respect to an axis (A) of the motor.

2. Cooling housing according to claim 1, **characterized in that** the cross-sections of flow of the individual coolant channels (11) of the first cooling circuit (10) are larger than the cross-sections of flow of the individual coolant channels (21) of the second cooling circuit (20).

3. Cooling housing according to claim 1 or 2, **characterized in that** the coolant channels (11) of the first cooling circuit (10), at least portions thereof, can extend in the shape of a spiral between the first coolant inlet (16) and the first coolant outlet (17).

4. Cooling housing according to claim 3, **characterized in that** neighboring windings of the spiral-shaped extension are separated from each other by ribs (19) that are molded to the outside of the internal cooling wall (31).

5. Cooling housing according to any one of the claim 1 to 4, **characterized in that** the coolant channels (21) of the second cooling circuit (20), at least portions thereof, can extend in the shape of a spiral between the second coolant inlet (26) and the second coolant outlet (27).

6. Cooling housing according to claim 5, **characterized in that** neighboring windings of the spiral-shaped extension are separated from each other by ribs (29) that are molded to the outside of the additional cooling wall (32).

7. Cooling housing according to claims 3 and 5, **characterized in that** the coolant channels (21) of the second cooling circuit (20) are arranged in the shape of a multi-strand spiral, and **in that** the number of their spirals is larger than the number of spirals of the coolant channels (11) of the first cooling circuit (10) that are arranged in the form of a single-strand or multi-strand spiral.

8. Cooling housing according to any one of the claims 1 to 7, **characterized in that** the first coolant inlet (16) and the first coolant outlet (17) each have coolant lines (36, 37) connected to them for connection to a cooling unit (35) that is arranged outside of the cooling housing.

9. Cooling housing according to claim 1, **characterized by** at least one coolant pump (48) being arranged in at least one of the coolant lines (46, 47).

10. Cooling housing according to any one of the claims 1 to 9, **characterized in that** the coolant in the first cooling circuit (10) differs from the coolant in the second cooling circuit (20).

11. Cooling housing according to any one of the claims 1 to 10, **characterized in that** the cooling walls (31, 32) and the external jacket (33) each are separate components that are connected to each other in liquid-tight manner.

12. Cooling housing according to any one of the claims 1 to 10, **characterized in that** the cooling walls (31, 32) and the external jacket (33) are provided together as a one-part body made of the same materials.

## Revendications

1. Boîtier de refroidissement (2) avec un espace intérieur (9) destiné à recevoir un moteur électrique (1), le moteur électrique (1) étant constitué d'un rotor (4) monté en rotation au centre et d'un stator (5) entourant le rotor (4), et le stator (5) comprenant une pluralité d'enroulements électriques (6), avec les composants suivants :
- une paroi de refroidissement intérieure (31) disposée autour du stator (5), qui est en liaison de conduction thermique avec le stator (5) et qui délimite vers l'intérieur des canaux de réfrigérant (11) d'un premier circuit de refroidissement (10), qui s'étendent entre une première entrée de réfrigérant (16) et une première sortie de réfrigérant (17),
- au moins une autre paroi de refroidissement (32) qui sépare les canaux de réfrigérant (11) du premier circuit de refroidissement (10) des canaux de réfrigérant (21) d'un deuxième circuit de refroidissement (20), les canaux de réfrigérant (21) du deuxième circuit de refroidissement (20) s'étendant entre une deuxième entrée de réfrigérant (26) et une deuxième sortie de réfrigérant (27), et le deuxième circuit de refroidissement (20) étant séparé du premier circuit de refroidissement (10), le deuxième circuit de refroidissement utilisant de l'huile comme réfrigérant, et
- une enveloppe extérieure (33) qui délimite vers l'extérieur les canaux de réfrigérant (21) du deuxième circuit de refroidissement (20),
**caractérisé en ce que** des conduites de réfrigérant (46, 47) sont respectivement raccordées à la deuxième entrée de réfrigérant (26) et à la deuxième sortie de réfrigérant (27) depuis l'extérieur du boîtier de refroidissement, l'une des conduites de réfrigérant (46) menant à l'une des extrémités du boîtier de refroidissement et l'autre conduite de réfrigérant (47) menant à l'autre extrémité du boîtier de refroidissement dans l'espace intérieur (9) du boîtier de refroidissement,
les canaux de réfrigérant (21) du deuxième circuit de refroidissement (20) se trouvant radialement plus à l'extérieur que les canaux de réfrigérant (11) du premier circuit de refroidissement (10),
l'autre paroi de refroidissement (32) étant de préférence disposée plus à l'extérieur que la paroi de refroidissement intérieure (31) par rapport à un axe (A) du moteur.

2. Boîtier de refroidissement selon la revendication 1, **caractérisé en ce que** les sections d'écoulement des différents canaux de réfrigérant (11) du premier circuit de refroidissement (10) sont plus grandes que les sections d'écoulement des différents canaux de réfrigérant (21) du deuxième circuit de refroidissement (20).

3. Boîtier de refroidissement selon la revendication 1 ou 2, **caractérisé en ce que** les canaux de réfrigérant (11) du premier circuit de refroidissement (10) s'étendent au moins par sections en forme d'hélice entre la première arrivée de réfrigérant (16) et la première sortie de réfrigérant (17).

4. Boîtier de refroidissement selon la revendication 3, **caractérisé en ce que** des spires adjacentes du tracé hélicoïdal sont séparées les unes des autres par des nervures (19) formées sur le côté extérieur de la paroi de refroidissement interne (31).

5. Boîtier de refroidissement selon l'une des revendications 1 à 4, **caractérisé en ce que** les canaux de réfrigérant (21) du deuxième circuit de refroidissement (20) s'étendent au moins en partie en forme d'hélice entre la deuxième entrée de réfrigérant (26) et la deuxième sortie de réfrigérant (27).

6. Boîtier de refroidissement selon la revendication 5, **caractérisé en ce que** des spires adjacentes du tracé hélicoïdal sont séparées les unes des autres par des nervures (29) qui sont formées sur le côté extérieur de l'autre paroi de refroidissement (32).

7. Boîtier de refroidissement selon les revendications 3 et 5, **caractérisé en ce que** les canaux de réfrigérant (21) du deuxième circuit de refroidissement (20) sont disposés sous la forme d'une hélice à plusieurs filets, et **en ce que** leur nombre d'hélices est supérieur au nombre d'hélices des canaux de réfrigérant (11) du premier circuit de refroidissement (10) disposés sous la forme d'une hélice à un ou plusieurs filets.

8. Boîtier de refroidissement selon l'une des revendications 1 à 7, **caractérisé en ce que** des conduites de réfrigérant (36, 37) sont raccordées respectivement à la première entrée de réfrigérant (16) et à la première sortie de réfrigérant (17) pour la liaison avec un radiateur (35) disposé à l'extérieur du boîtier de refroidissement.

9. Boîtier de refroidissement selon la revendication 1, **caractérisé par** au moins une pompe à réfrigérant (48) disposée dans au moins une des conduites de réfrigérant (46, 47).

10. Boîtier de refroidissement selon l'une des revendications 1 à 9, **caractérisé en ce que** le fluide de refroidissement dans le premier circuit de refroidissement (10) est différent du fluide de refroidissement dans le deuxième circuit de refroidissement (20).

11. Boîtier de refroidissement selon l'une des revendications 1 à 10, **caractérisé en ce que** les parois de refroidissement (31, 32) et l'enveloppe extérieure (33) sont respectivement des composants propres qui sont reliés entre eux de manière étanche aux liquides.

12. Boîtier de refroidissement selon l'une quelconque des revendications 1 à 10, **caractérisé en ce que** les parois de refroidissement (31, 32) et l'enveloppe extérieure (33) sont réalisées conjointement sous la forme d'un corps d'une seule pièce et d'un seul matériau.
